# EUROPEAN PATENT SPECIFICATION

(11) **EP 1 023 138 B1**
(45) Date of publication and mention of the grant of the patent: **22.10.2003**
(21) Application number: 98946441.7
(22) Date of filing: 19.08.1998
(51) Int. Cl.: B23K 20/02, B23K 1/002

(54) **APPARATUS FOR AMORPHOUS BONDING OF TUBULARS**
VORRICHTUNG ZUM AMORPHEN VERBINDEN VON ROHREN
APPAREIL DE LIAISON AMORPHE D'ELEMENTS TUBULAIRES

(30) Priority: 19.08.1997 GB 9717438; 03.09.1997 GB 9718585; 11.09.1997 GB 9719230
(43) Date of publication of application: 02.08.2000
(73) Proprietor: SHELL INTERNATIONALE RESEARCH MAATSCHAPPIJ B.V., 2596 HR Den Haag (NL)
(72) Inventor: PIETRAS, Bernd-Georg, D-30900 Wedemark (DE)
(86) International application number: EP9805475
(87) International publication number: WO99008828

(56) References cited:
- EP-A- 0 418 606
- EP-A- 0 803 313
- US-A- 4 908 491
- PATENT ABSTRACTS OF JAPAN vol. 012, no. 057 (M-670), 20 February 1988 & JP 62 203690 A (NIPPON STEEL CORP;OTHERS: 01), 8 September 1987

## Description

### Background of the Invention

This invention relates to an apparatus for amorphous bonding of tubulars.

Amorphous bonding is used to join components in the automotive industry and, as disclosed in European patent application No. 418606, which is considered to represent the closest prior art, to join tubulars. Typically the surfaces to be joined are ground so that they are substantially parallel. A film of a special alloy is then inserted between the surfaces and the components are urged together and heat applied to the vicinity of the joint for a predetermined time. The finished joint is extremely strong and the metallurgical properties of the joint are relatively homogeneous throughout.

At the present time the surfaces to be joined are ground into parallism by a machine tool having a working head with a grinding wheel disposed to either side thereof. In use, the machine tool is guided between the surfaces to be ground on a track.

There is a long standing need to also use amorphous bonding to join tubulars for use in the construction, maintenance and repair of oil and gas wells. It will be appreciated that this raises many technical problems both because of the extremely hazardous vapours associated with drilling and the fact that much of our oil and gas reserves are accessed from offshore platforms which sway back and forth in heavy seas and inclement weather.

The problem which the present invention addresses is how to prepare and align the surface of tubulars, which may vary from 15 cm to 105 cm in diameter prior and during the amorphous bonding process.

The prior art solution is not feasible for several reasons. Firstly, if small diameter grinding wheels are used then it is virtually impossible to move the grinding tool around the tubulars with sufficient precision bearing in mind that onshore drilling rigs and offshore platforms are mobile.

If large diameter grinding wheels are used the head of the machine tool becomes extremely large and the difficulties associated with operating the machine tool at a well head become daunting.

The present invention approaches the problem of aligning and preparing the tubular ends and of aligning the amorphous bonding apparatus from a different angle.

### Summary of the Invention

The present invention provides an apparatus for amorphous bonding of tubulars, the apparatus comprising
- a clamping assembly, which clamping assembly is adapted to maintain a pair of tubulars of which the ends are to be bonded in substantial axial alignment;
- a machining tool comprising a body with a pair of axially spaced apart cutting units comprising cutters which, in use, rotate about the tubulars to prepare said adjacent ends of said tubulars such that the prepared ends are substantially parallel to each other; and
- an induction coil for heating the prepared ends of the tubulars while the prepared ends are pressed towards each other and the tubulars are maintained in substantial axial alignment by the clamping assembly.

Preferably, each cutting unit comprises at least two cutters, which are advanced radially inwardly as cutting progresses, and one of which may be wider than the other and which may be arranged to finish a cut started by a narrower leading cutter.

The body may be designed to be slid over the end of a tubular or may be a two piece structure adapted to be mounted around the tubulars to be cut. This two piece structure is preferred as it enables a section of pipe containing a faulty joint to be rapidly cut-out.

It is observed that it is known to cut pipe using a Split Frame Cutting Device such as manufactured and sold by Wachs Limited of Macclesfield, Cheshire, SK11 7BD, England. This known cutting device essentially comprises two halves which can be mounted around a tubular. The known cutting device only comprises a single cutter which is actuated by a pneumatic, hydraulic or electric power source to cut the tubular.

Preferably, the tubulars are cut simultaneously by the apparatus according to the invention although they could be cut sequentially. It is also contemplated that cutting of one tubular may commence shortly before the cutting of the other tubular. This later arrangement has the advantage that the initial cut in the lower tubular locates the associated cutting element and thereby acts as a guide when the cutting of the other tubular commences.

It also preferred that the induction coil is equipped with a alignment device for gripping at least one of said tubulars, which alignment device is held in a fixed relation with respect to said induction coil and that the alignment device comprises wheels which run on rails, which rails are mounted on the support frame.

Preferably said alignment device comprises spring loaded arms, which arms comprise centering rollers.

Alternatively the alignment device comprises eccentric wheels for which are drivable by a motor in a synchronised manner, and the alignment device comprises two halves, each half comprising at least one eccentric roller.

Furthermore it is preferred that the induction coil comprises at least two separate and distinct parts and that the apparatus further includes an enclosure having at least two separate and distinct parts, which parts each contain one of said parts of the induction coil and which parts are, in use, urged together to form a sealed shield gas chamber around the heating coil and the ends of the bonded tubulars during the amorphous bonding process.

### Brief description of the drawings

For a better understanding of the present invention reference will now be made, by way of example, to the accompanying drawings, in which:-
Fig. 1 is a perspective view of one embodiment of an apparatus in accordance with the present invention, showing the components just prior to a cutting operation;
Fig. 2 is a schematic side view of the cutting apparatus illustrating the principle of the cutting procedure according to the present invention;
Fig. 3 is a schematic view of the cutting apparatus of Fig. 2 being used to remove a section of tubing containing a faulty joint;
Fig. 4 is a vertical section through part of the apparatus shown in Fig. 1 at the completion of a cutting operation;
Fig. 5 is an enlarged view, partly in cross section, of the heating coil alignment assembly of the amorphous bonding machine as shown in Fig. 1;
Fig. 6 is an enlarged underneath plan view of a part of the heating coil alignment centering assembly of the amorphous bonding apparatus as shown in Fig. 1;
Fig. 7 is a side view of a second embodiment of a heating coil alignment assembly of an apparatus according to the present invention; and
Fig. 8 is a top plan view of the apparatus shown in Fig. 7.
Fig. 9 is a detailed view, to an enlarged scale, of the split heating coil of the apparatus of Fig. 1;
Fig. 10 is a view, to a further enlarged scale, of part of the view shown in Fig. 9;
Fig. 11 is a view similar to Fig. 10 but showing an alternative heating coil assembly in an open position; and
Fig. 12 is a view similar to Fig. 11 showing the heating coil assembly in a clamped position.

### Detailed description of the Invention

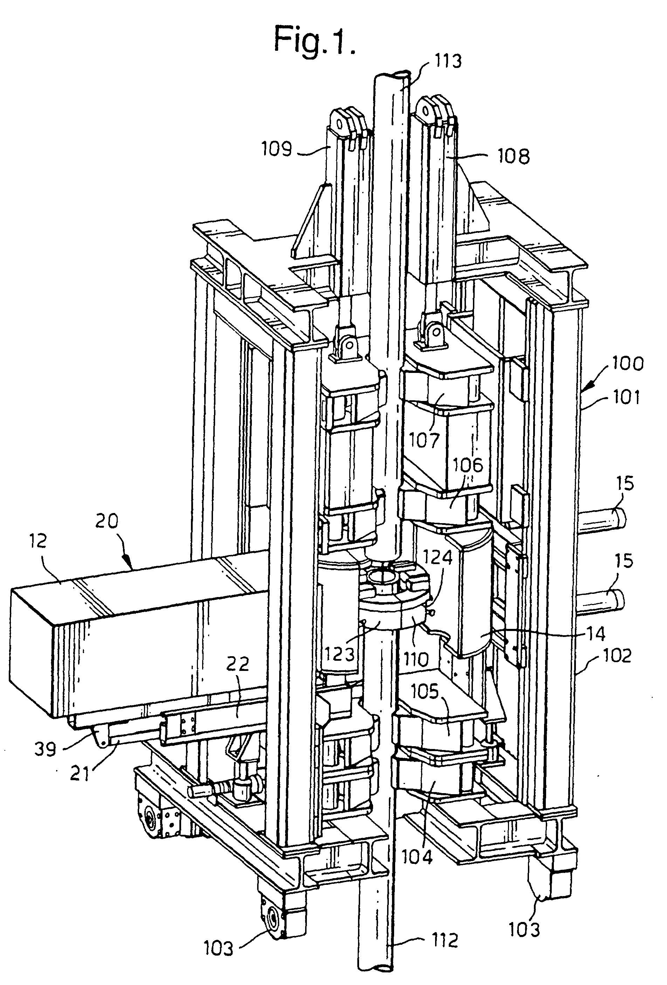

Referring to Fig. 1 of the drawings, there is shown an amorphous bonding apparatus according to the invention.

The apparatus, which is generally identified by reference numeral 100, comprises a support frame 102 which is mounted on rollers 103 which run on rails that lie in channels (not shown).

The support frame 102 is provided with a clamping assembly comprising four clamps 104, 105, 106, 107 arranged as a lower pair 104, 105 and an upper pair 106, 107. The clamps 106, 107 can be raised and lower by two pistons and cylinder assemblies 108, 109.

A pipe cutter 110 is mounted on a support which is mounted on the support frame 102. The pipe cutter 110 will be described in greater detail hereinafter. However, at this point it should be understood that in use, a lower tubular 112 will be held in slips (not shown). The top of the lower tubular 112 is firmly held by clamps 104 and 105 whilst an upper tubular 113 is firmly held by clamps 106, 107 in substantial axial alignment with the lower tubular 112.

The position of the clamps 106, 107 in the horizontal plane can be adjusted by micro adjusters to ensure substantial axial alignment of the upper tubular 113 with the lower tubular 112.

Prior to the cutting operation the piston and cylinder assemblies 108, 109 are actuated so that the upper tubular 113 is lowered from the position shown in Fig. 1 until the adjacent faces of the lower tubular 112 and the upper tubular 113 are about 20 mm apart.

At this time the pipe cutter 110 is advanced and mounted around the joint as shown. The pipe cutter 110 is a modified Wachs Split Frame Cutter as supplied by Wachs Limited of Macclesfield, Cheshire, SK11 7BD, England. The standard Wachs Split Frame Cutter only has a single cutting unit which, when the device is actuated, cuts the pipe in one place.

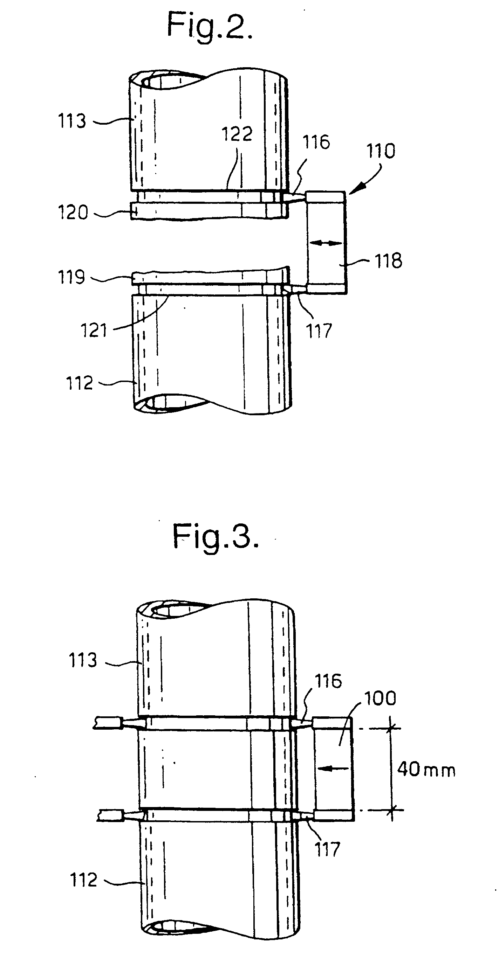

In contrast, as shown in Fig. 2, the pipe cutter 110 of the apparatus according to the present invention has two cutting units 116, 117 which are spaced apart by about 40 mm but which are mounted on a common body 118.

In order to facilitate the cutting operation each cutting unit 116, 117 is provided with two cutters, one of which is wider than the other. The narrow cutter, for example having a width of 3.6mm is arranged to make the initial cut whilst the wider cutter, which has a width of, for example 4mm, is designed to follow the narrow cutter and perfect the edge.

When the pipe cutter 110 is activated it cuts the ends 119, 120 off the lower tubular 112 and upper tubular 113 respectively leaving the surfaces 121 and 122 in the parallism dictated by the cutting units 116 and 117. It will be appreciated that the surfaces 121 and 122 will be in such parallism regardless of the orientation of the pipe cutter 110 although good engineering practice requires that the surfaces 121 and 122 should be perpendicular to the longitudinal axis of the lower tubular 112 and upper tubular 113.

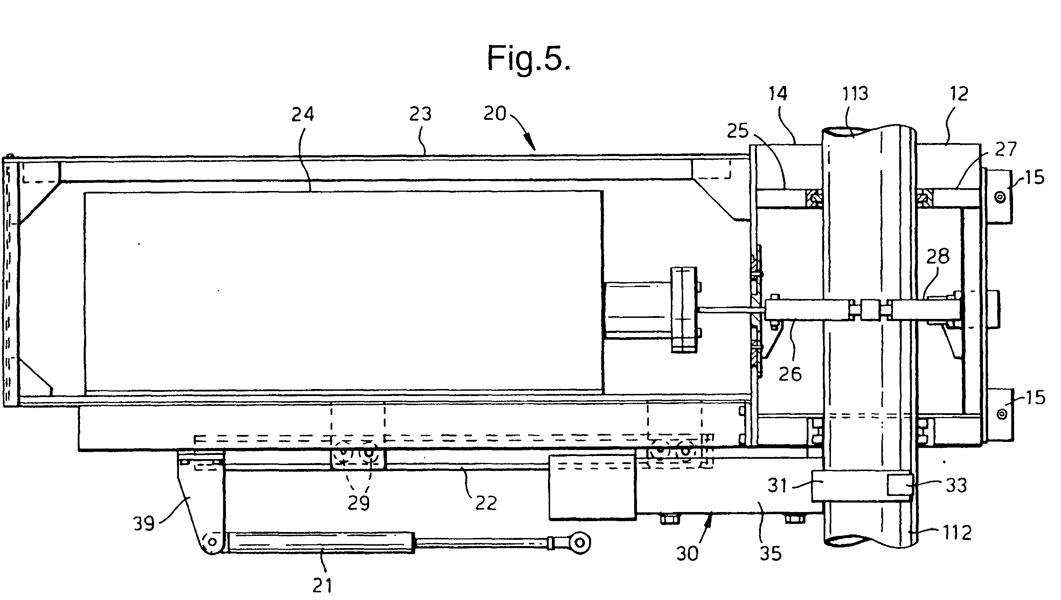

Once the surfaces 121 and 122 have been prepared a film of a suitable alloy is inserted therebetween. The surfaces 121 and 122 are then pressed together using piston and cylinder assemblies 108, 109 whilst heat is applied to the area of the joint using an induction heater shown in Fig. 5-9. This process forms the amorphous bond which is subsequently tested. Should the joint fail then pipe cutter 110 is remounted on the tubular over the joint and actuated to cut out a tubular section as shown in Fig. 3.

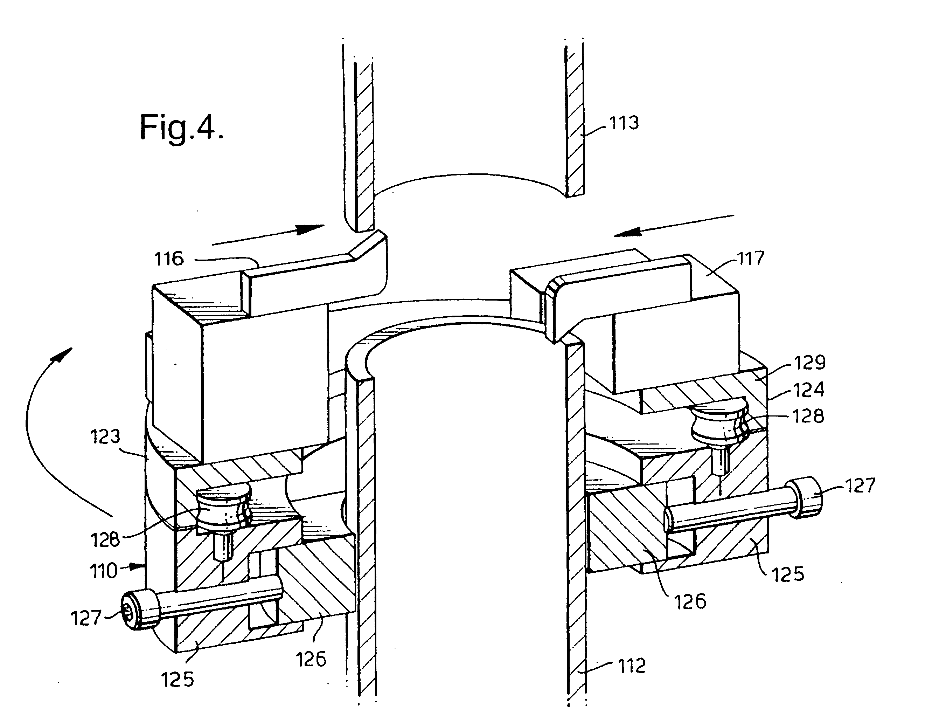

Referring now to Fig. 4, the pipe cutter 110 comprises two halves 123 and 124 which are secured to one another circumjacent the lower tubular 112. The pipe cutter 110 comprises a lower member 125 which is provided with a plurality of segments 126 the radial position of which is adjusted by set screws 127. The position of the segments 126 is set so that when the two halves 123 and 124 are secured together the pipe cutter 110 is firmly mounted on the lower tubular 112.

A plurality of rollers 128 are mounted on the lower member 125 and allow a carriage 129 to rotate about the lower tubular 112.

Two cutting units 116 and 117 are mounted on the carriage 129. The cutting unit 116 comprises two cutters only one of which is visible in Fig. 4. Similarly the cutting unit 117 comprises two cutters only one of which is visible in Fig. 4.

As can be seen in Fig. 4, the cutting unit 116 is spaced further from the carriage 129 than the cutting unit 117.

In use the carriage 129 is rotated relative to the lower member 125. This can be achieved in any convenient manner, for example by a small hydraulic motor having its body mounted on the lower member 125 and arranged to rotate a pinion which engages in a track on the carriage 129. As will be appreciated the cutters are advanced radially inwardly as cutting progresses. This can be effected by any convenient advancing mechanism which may be manually or automatically actuated.

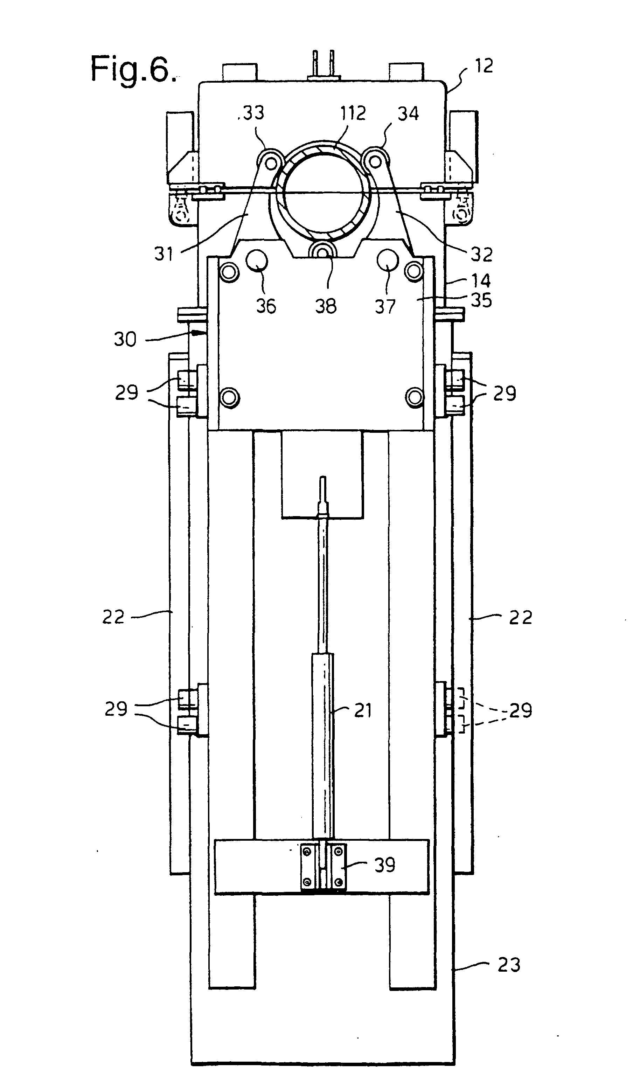

Referring to Figs. 5 and 6, there is shown an apparatus for aligning an induction coil with a tubular in accordance with the invention. The apparatus, which is generally identified by reference numeral 20, comprises a first assembly 12 and a second assembly 14.

The second assembly 14 comprises a container 23 containing equipment 24 for producing high current for an induction coil 26, 28. The equipment 24 is rigidly attached to the container 23 which is explosion proof. The container 23 is rigidly attached to a half of an explosion proof double walled housing 25 which accommodates one half of the induction coil 26, 28.

The first assembly 12 comprises the other half of explosion-proof double walled housing 27 and the other half of the induction coil 28. The first assembly 12 is mounted on one end of hydraulic cylinders 15. The other end of the hydraulic cylinders 15 are attached to the support frame 102 (see Fig. 1).

The container 23 is mounted on rollers 29 which roll along a track 22 which is rigidly secured to the support frame 102.

The container 23 is also rigidly connected to an alignment device 30. The alignment device 30 comprises two arms 31 and 32, each arm having a centering roller 33 and 34 respectively. The arms 31 and 32 are movably connected to the housing 35 of the alignment device 30 about pins 36 and 37 respectively. The arms 31 and 32 are biased towards each other by springs (not shown). A further centering roller 38 is provided on the housing 35 between the arms 31 and 32.

A hydraulic cylinder 21 is attached at one end to the container 23 by a lug 39 and at the other end to the support frame 102.

In use, the support frame 102 is pushed over the lower pipe 112 as shown in Fig. 1. The upper pipe 113 is lowered into position. At this stage the cutting operations to the ends of the lower and upper pipes 112, 113 may be carried out. When it is desired to join the lower and upper pipes 112, 113 the second assembly 14 is advanced towards the lower pipe 112 using hydraulic piston 21. The second assembly 14 rolls along track 22 until all three rollers 33, 34, 38 engage the lower pipe 112 (as shown in Fig. 6). As the second assembly 14 advances towards the lower and upper pipes 112, 113, the rollers 33 and 34 on the ends of the arms 31 and 32 roll over the lower pipe 112. The second assembly 14 is now maintained in a fixed position with respect to the lower pipe 112. The first assembly 12 can now be moved into engagement with second assembly 14 using pistons 15 (shown in Fig. 1). The two halves of the explosion proof housing 25, 27 and the two halves of the induction coil 26, 28 co-operate to seal off the volume surrounding the induction coil 26, 28 and to allow the current to flow through the induction coil 26, 28. The bonding process now begins. After the bonding process, pistons 15 are now retracted retracting the first assembly 12. Piston 21 is extended to retract the second assembly 14. The alignment device 30 is released from engagement with the lower tubular 112.

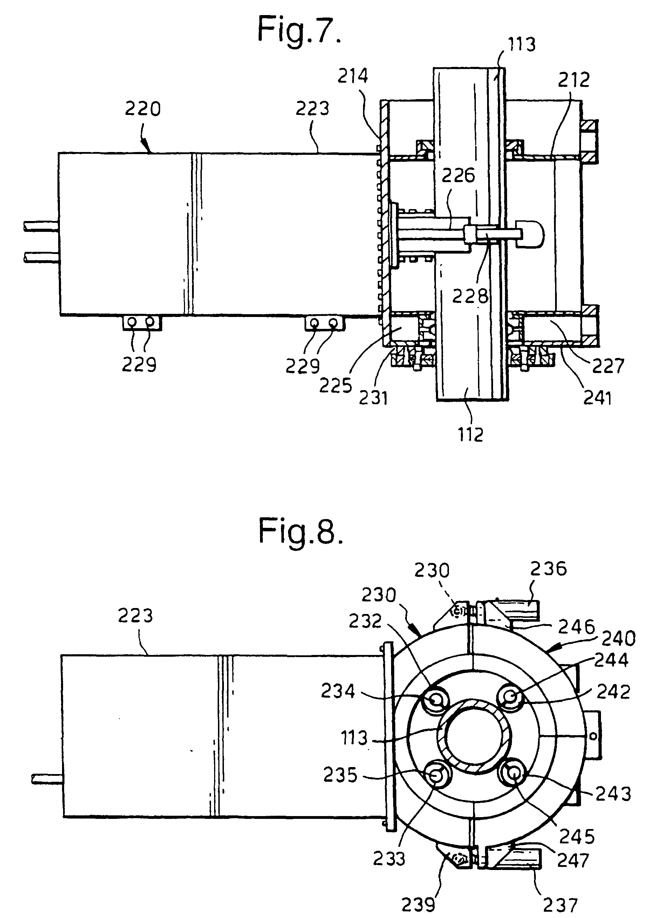

Reference will now be made to Figs 7 and 8 in which there is shown a second embodiment of the heating coil and alignment device according to the invention generally identified by reference numeral 220. The device 220 comprises a first assembly 212 and a second assembly 214.

The second assembly 214 comprises a container 223 containing apparatus for producing high current for an induction coil 226, 228. The device is rigidly attached to the container 223. The container 223 is rigidly attached to one half of an explosion proof housing 225 which contains one half of the induction coil 226.

The first assembly 212 comprises the other half of the explosion proof housing 227 and the other half of the induction coil 228. The first assembly 212 is mounted on hydraulic cylinders, which are attached to the support frame 102.

The second assembly 214 is movable along a track (not shown). The container 223 is mounted on rollers 229 which roll along a track in a similar fashion the first embodiment.

Half of an alignment device 230 is rigidly mounted beneath the base 231 of the half of the explosion proof housing 225. The other half of the alignment device 240 is rigidly mounted beneath the base 241 of the other half of the explosion proof housing 227. Each half of the alignment device 230, 240 comprises two eccentric wheels 232, 233, 242, 243. Each eccentric wheel has a hole lined with splines with which a splined shaft 234, 235, 244, 245 engages. The half of the alignment device 230 is provided with hydraulic pistons 236, 237 which are pivotally mounted on lugs 238 and 239. The other half of the alignment device 240 is provided with lugs 246 and 247 for retaining said hydraulic pistons 236, 237.

In use, the support frame 102 is put into position and pushed over the lower pipe 112. The upper pipe 113 is lowered into position. At this stage various operations to prepare the ends of the lower and upper pipes as disclosed in Figs. 2-4 may be carried out. The second assembly 214 is then brought closer co the lower pipe 112 using a hydraulic piston (not shown). The second assembly 214 rolls along the track until the eccentric wheels 232 and 233 contact the lower pipe 112. The first assembly 212 is also brought closer to the lower pipe 112 using hydraulic pistons (not shown) . The hydraulic pistons 236, 237 are swung over the lugs 246, 247 and hydraulic pressure is applied to the pistons to bring the two halves of the device 230, 240 together. The splined shafts 234, 235, 244 and 245 are rotated by a hydraulic motor (not shown) in order to centre the device and hence the induction coil 226, 228 in relation to the lower pipe 112, whilst retaining parallelism between the lower and upper pipes 112, 113.

The bonding process now begins. After the bonding process the pistons 236, 237 are extended and swung free of the lugs 246, 247, pistons (not shown) are also retracted to retract the first and second assemblies 212 and 214.

Other modifications and/or improvements are envisaged, such as the container 23, 223 may be explosion proof and/or double walled.

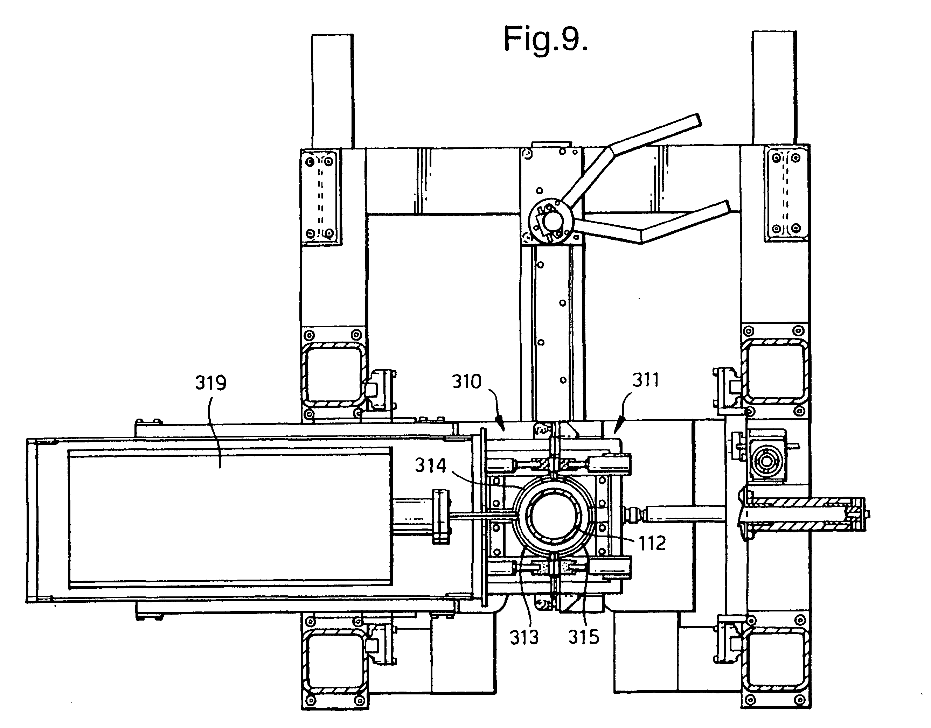

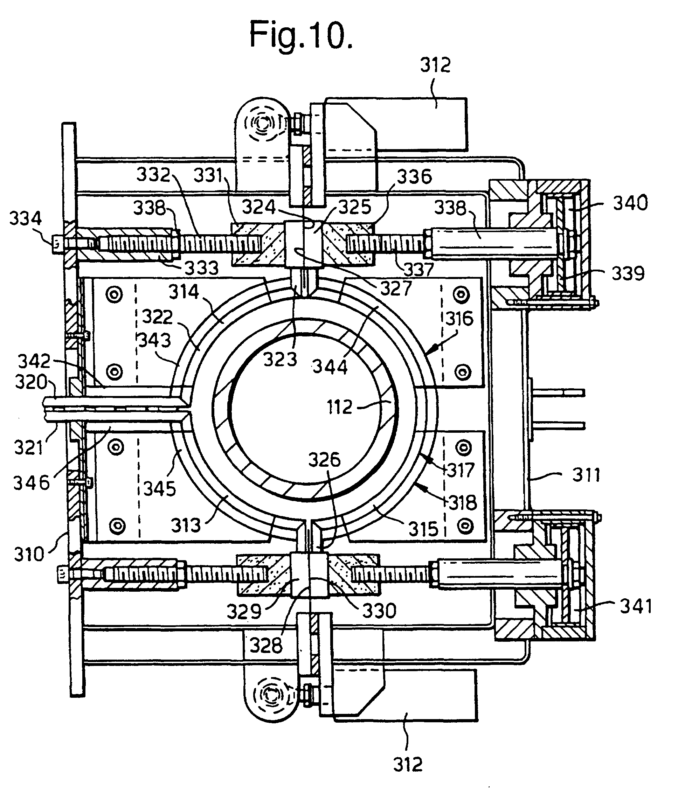

Referring to Figs. 9 and 10 there is shown that each half 310, 311 of an enclosure surrounding tubular 112 (and also 113) contains separate and distinct segments 313, 314, 315 of a coil 316.

The coil 316 comprises a heating element 317, the radially outer surface of which is provided with a cooling channel 318. The heating element 317 is connected to a high frequency oscillator 319 by rods 320 and 321.

Rod 320 is welded to a segment 322 which is provided with an ear 323. The ear 323 is made of solid brass and has a contact face 324 which is coated with silver.

The segment 315 has an ear 325, 326 at each end thereof. Each ear 325, 326 is welded to the segment 315 and is made of solid brass having a contact face 327, 328 coated with silver. Finally, one end of segment 313 is connected to rod 321 whilst the other end is provided with ear 329 which has a contact face 330 which is silvered.

As can be seen from Fig. 10 the ears 323, 325; 326, 329 are urged together. This is extremely important for several reasons, in particular, to minimise electrical resistance and to inhibit sparking.

Turning back to Fig. 10, ear 323 is supported by an insulator 331 which is mounted on the end of a threaded rod 332 which is slidably mounted in a housing 333. The insulator 331 can be advanced and retracted by rotation of a set screw 334. A nut 335 mounted on the threaded rod 332 limits the movement in one direction.

Ear 329 is supported in a similar manner to ear 323 and the support arrangement will not be discussed in detail.

Ear 325 is biased against ear 323 by an arrangement which comprises an insulator 336 and a piston rod 337 which is slidably mounted in a sleeve 338 fast with the half 311. The other end of the piston rod 337 is connected to a piston 339 which can be advanced by introducing hydraulic fluid into chamber 340.

Ear 326 is associated with a similar arrangement to ear 325 and this will not be described in detail.

In use, after the halves 310, 311 have been fastened together the ears 323, 325; 326, 329 will be lying opposite one another. At this stage hydraulic fluid is admitted to the chamber 340 (and chamber 341) to advance the respective piston rods and urge the ears against one another with the required force.

Once the required force has been applied heating can commence and the amorphous bond completed.

In the embodiment described the cooling channel 318 is formed by inlet channel 342, circumferential channels 343, 344 and 345 and outlet channel 346, water tight joints being formed between the circumferential channels 343 and 344, and 344 and 345 when the halves 310, 311 are joined. However, if desired, the segments 343 and 345 in half 310 could be cooled by one water cooling system and the segment 344 in the other half by a separate and distinct water cooling system.

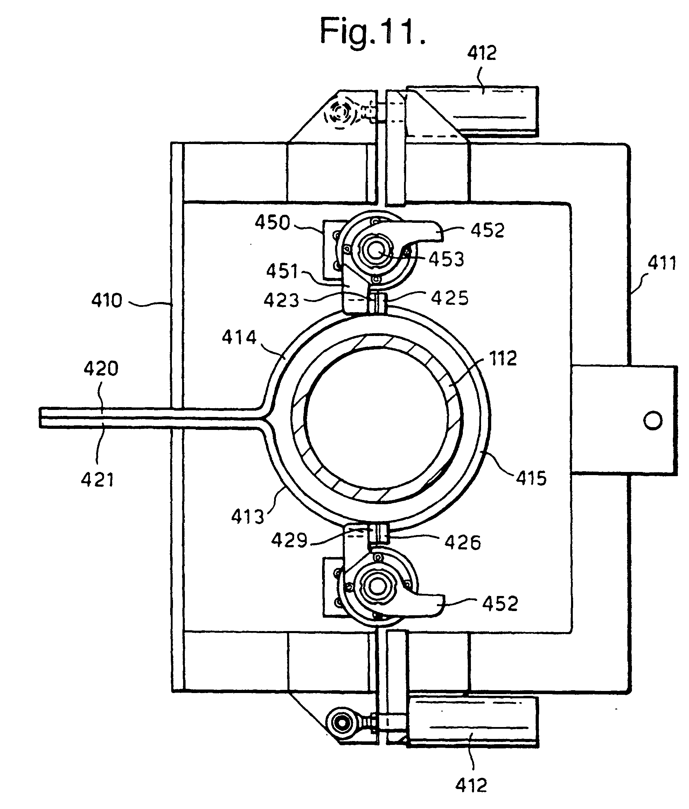

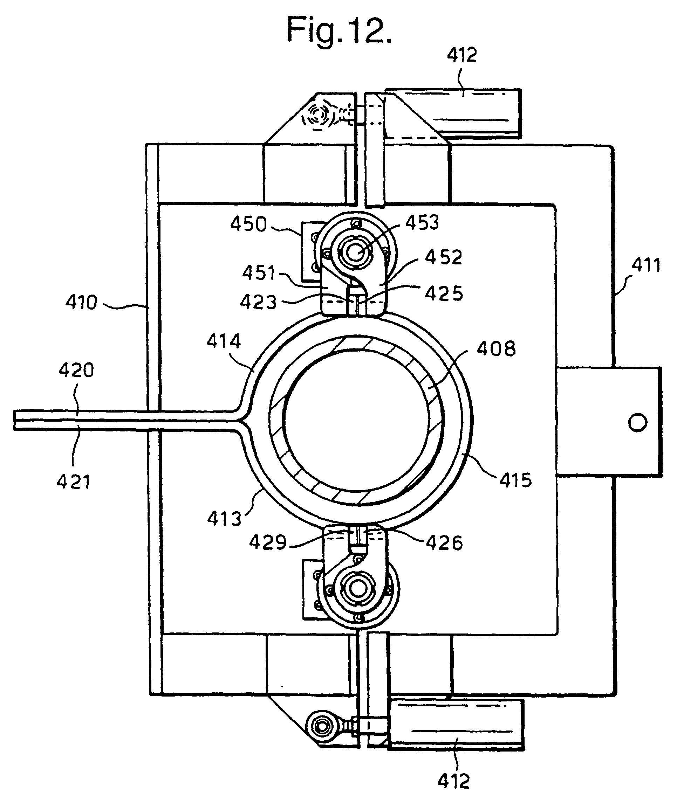

Figures 11 and 12 show an alternative embodiment of the split heating coil. Parts have functions similar to parts shown in Figures 9 and 10 have been identified by similar reference numerals but in the "400" series.

The main difference is in the means to urge the ears 423, 425; 426, 429 together. In this case the means comprises a base plate 450 which is bolted to the bottom of the half 410. A fixed support 451 is mounted on the base plate 450 and supports the ear 423. A movable support 452 is rotatably mounted about a post 453 which projects upwardly from the base plate 450.

A hydraulic piston-and-cylinder is mounted beneath the base plate 450 and is arranged to pivot the movable support 452 between its open position shown in Fig. 11 and its closed position shown in Fig. 12. This arrangement has the advantage that the forces holding the ears together do not act between the two halves 410, 411.

In the embodiment shown in Figs. 11 and 12 the water cooling arrangement for the coil has been omitted for clarity.

## Claims

1. An apparatus for amorphous bonding of tubulars (112,113), the apparatus (100) comprising
- a clamping assembly (104-107), which clamping assembly is adapted to maintain a pair of tubulars (112,113) of which the ends are to be bonded in substantial axial alignment;
- a machining tool (110) comprising a body with a pair of axially spaced apart cutting units (116,117) comprising cutters which, in use, rotate about the tubulars to prepare said adjacent ends of said tubulars such that the prepared ends (121,122) are substantially parallel to each other; and
- an induction coil (26,28,226,228) for heating the prepared ends of the tubulars while the prepared ends (121,122) are pressed towards each other and the tubulars are maintained in substantial axial alignment by the clamping assembly (104-107).

2. The apparatus of claim 1, further comprising a support frame (102) which carries the clamping assembly (104-107), the machining tool (110) and the induction coil (26,28,226,228).

3. An apparatus as claimed in claim 1, wherein each cutting unit (116,117) comprises at least two cutters which, in use, are advanced radially inwardly as cutting progresses.

4. An apparatus as claimed in claim 3, wherein one of said cutters is wider than the other and is arranged to finish a cut started by a leading cutter.

5. An apparatus as claimed in claims 1, 2 or 3, wherein said body is a two piece structure (123,124) adapted to be mounted around the tubulars (123,124) to be cut.

6. An apparatus as claimed in claim 6, wherein said body is movably mounted on the support frame (102).

7. An apparatus as claimed in claim 1, wherein the induction coil (26,28,226,228) is equipped with an alignment device (230,240) for gripping at least one of said tubulars (112,113) which alignment device is held in a fixed relation with respect to at least part of said induction coil.

8. An apparatus as claimed in claim 7, wherein the alignment device (30) comprises a section which is mounted on wheels (29) which run on rails (22) that are mounted on the support frame (102).

9. An apparatus as claimed in claim 7, wherein the alignment device comprises spring loaded arms (31,32), which arms comprise centering rollers (3,3).

10. An apparatus as claimed in claim 7, wherein the alignment device (230,240) comprises eccentric rollers (232,233,242,243) which are drivable by a motor in a synchronised manner, and the alignment device comprises two halves, each half comprising at least one eccentric roller.

11. An apparatus as claimed in claim 1, wherein the induction coil (26,28,226,228) comprises at least two separate and distinct parts.

12. An apparatus as claimed in claim 11, further including an enclosure (25,27) having at least two separate and distinct parts, which parts each contain one of said parts of the induction coil (26,28,226,228) and which parts are, in use, urged together to form a sealed shield gas chamber around the heating coil and the ends of the bonded tubulars (112,113) during the amorphous bonding process.

## Patentansprüche

1. Vorrichtung zum amorphen Verbinden von Rohren (112, 113), wobei die Vorrichtung (100) aufweist:
- eine Klemmanordnung (104-107), die so ausgebildet ist, daß sie ein Paar von Rohren (112, 113), deren Enden miteinander verbunden werden sollen, im wesentlichen in axialer Ausrichtung hält;
- ein Bearbeitungswerkzeug (110) mit einem Körper mit einem Paar von axial beabstandeten Schneideinheiten (116, 117), die Schneider aufweisen, welche im Betrieb um die Rohre rotieren, um die benachbarten Enden der Rohre vorzubereiten, derart, daß die vorbereiteten Enden (121, 122) zueinander im wesentlichen parallel sind; und
- eine Induktionsspule (26, 28, 226, 228) zum Erhitzen der vorbereiteten Enden der Rohre (121, 122), während die vorbereiteten Enden gegeneinandergedrückt und die Rohre durch die Klemmanordnung (104-107) im wesentlichen in axialer Ausrichtung gehalten werden.

2. Vorrichtung nach Anspruch 1, bei welcher ein Tragrahmen (102) vorgesehen ist, welcher die Klemmanordnung (104-107), das Bearbeitungswerkzeug (110) und die Induktionsspule (26, 28, 226, 228) trägt.

3. Vorrichtung nach Anspruch 1, bei welcher jede Schneideinheit (116, 117) zumindest zwei Schneider aufweist, die mit dem Schneidfortschritt radial nach innen vorgeschoben werden.

4. Vorrichtung nach Anspruch 3, bei welcher einer der Schneider breiter als der andere und so angeordnet ist, daß er einen Schnitt beendet, der von dem vorhergehenden Schneider begonnen worden ist.

5. Vorrichtung nach Anspruch 1, 2 oder 3, bei welcher der Körper einen zweiteiligen Aufbau (123, 124) hat, der so ausgebildet ist, daß er um die zu schneidenden Rohre (123, 124) herum montiert werden kann.

6. Vorrichtung nach Anspruch 5, bei welcher der Körper auf dem Tragrahmen (102) beweglich montiert ist.

7. Vorrichtung nach Anspruch 1, bei welcher die Induktionsspule (26, 28, 226, 228) mit einer Ausrichtvorrichtung (230, 240) zum Ergreifen zumindest eines der Rohre (112, 113) versehen ist, wobei die Ausrichtvorrichtung in fixer Relativbeziehung zu zumindest einem Teil der Induktionsspule gehalten ist.

8. Vorrichtung nach Anspruch 7, bei welcher die Ausrichtvorrichtung (30) einen Abschnitt aufweist, der auf Rädern (29) montiert ist, die auf Schienen (22) laufen, welche von dem Tragrahmen (102) getragen sind.

9. Vorrichtung nach Anspruch 7, bei welcher die Ausrichtvorrichtung federbelastete Arme (31, 32) aufweist, die mit Zentrierrollen (33, 34) versehen sind.

10. Vorrichtung nach Anspruch 7, bei welcher die Ausrichtvorrichtung (230, 240) exzentrische Rollen (232, 233, 242, 243) aufweist, die von einem Motor synchron angetrieben sind, und die Ausrichtvorrichtung zumindest zwei Hälften hat, von denen jede zumindest eine exzentrische Rolle aufweist.

11. Vorrichtung nach Anspruch 1, bei welcher die Induktionsspule (26, 28, 226, 228) zumindest zwei separate und verschiedene Teile aufweist.

12. Vorrichtung nach Anspruch 11, die ferner ein Gehäuse (25, 27) mit zumindest zwei separaten und verschiedenen Teilen aufweist, wobei die Teile jeweils einen der Teile der Induktionsspule (26, 28, 226, 228) enthalten und im Betrieb gegeneinandergedrückt werden, um eine abgedichtete Schutzgaskammer um die Heizspule und die Enden der verbundenen Rohre (112, 113) während des amorphen Verbindungsvorganges zu bilden.

## Revendications

1. Appareil de liaison amorphe d'éléments tubulaires (112, 113), l'appareil (100) est constitué :
- d'un ensemble de serrage (104 à 107), lequel ensemble de serrage que l'on adapte pour maintenir une paire d'éléments tubulaires (112,113) les extrémités duquel sont destinées à être reliées en un alignement sensiblement axial ;
- d'une machine d'usinage (110) constituée d'un corps avec une paire d'unités de coupage (116,117) axialement espacées constituées de couteaux qui, en utilisation, tournent autour des éléments tubulaires pour préparer lesdites extrémités adjacentes desdits éléments tubulaires de telle façon que les extrémités préparées (121,122) soient sensiblement parallèles les unes aux autres ; et
- d'une bobine d'induction (26, 28, 226, 228) pour chauffer les extrémités préparées des éléments tubulaires pendant que l'on presse l'une vers l'autre les extrémités préparées (121,122) et que l'on maintient les éléments tubulaires dans un alignement sensiblement axial au moyen de l'ensemble de serrage (104 à 107).

2. Appareil selon la revendication 1, constitué de plus d'un châssis de support (102) qui porte l'ensemble de serrage (104 à 107), la machine d'usinage (110) et la bobine d'induction (26, 28, 226, 228).

3. Appareil selon la revendication 1, dans lequel chaque unité de coupage (116,117) est constituée d'au moins deux couteaux qui, en utilisation, sont avancés de façon radiale vers l'intérieur pendant que le coupage progresse.

4. Appareil selon la revendication 3, dans lequel l'un desdits couteaux est plus large que l'autre et est disposé pour terminer une coupe commencée par un couteau de tête.

5. Appareil selon les revendications 1, 2 ou 3, dans lequel ledit corps est une structure en deux morceaux (123,124) adaptée pour qu'on la monte autour des éléments tubulaires (123,124) à couper.

6. Appareil selon la revendication 6, dans lequel on monte ledit corps de façon mobile sur le châssis de support (102).

7. Appareil selon la revendication 1, dans lequel la bobine d'induction (26, 28, 226, 228) est équipée avec un dispositif d'alignement (230, 240) pour agripper au moins un desdits éléments tubulaires (112, 113) lequel dispositif d'alignement est supporté dans une relation fixe par rapport à au moins une partie de ladite bobine d'induction.

8. Appareil selon la revendication 7, dans lequel le dispositif d'alignement (30) est constitué d'une section que l'on monte sur des roues (29) qui tournent sur des rails (22) que l'on monte sur le châssis de support (102).

9. Appareil selon la revendication 7, dans lequel le dispositif d'alignement est constitué de bras à ressorts (31, 32), lesquels bras sont constitués de rouleaux de centrage (3, 3).

10. Appareil selon la revendication 7, dans lequel le dispositif d'alignement (230, 240) est constitué de rouleaux de centrage (232, 233, 242, 243) que l'on peut piloter au moyen d'un moteur de façon synchronisée, et le dispositif d'alignement est constitué de deux moitiés, chaque moitié étant constituée d'au moins un rouleau excentrique.

11. Appareil selon la revendication 1 dans lequel la bobine d'induction (26, 28, 226, 228) est constitué d'au moins deux parties séparées et distinctes.

12. Appareil selon la revendication 11, constitué de plus d'un boîtier (25, 27) ayant au moins deux parties séparées et distinctes, lesquelles parties contiennent chacune une desdites parties de la bobine d'induction (26, 28, 226, 228) et lesquelles parties sont, en utilisation, sont mises ensemble pour former une chambre à gaz avec un blindage scellé autour de la bobine de chauffage et des extrémités des éléments tubulaires reliés (112, 113) pendant le processus de liaison amorphe.
